Europäisches Patentamt

European Patent Office

Office européen des brevets

(11) Veröffentlichungsnummer: **0 470 351 A1**

# EUROPÄISCHE PATENTANMELDUNG

(21) Anmeldenummer: **91110305.9**

(51) Int. Cl.5: **A44B 19/42**, A44B 19/34

(22) Anmeldetag: **22.06.91**

(30) Priorität: **04.08.90 DE 4024839**

(43) Veröffentlichungstag der Anmeldung:
**12.02.92 Patentblatt 92/07**

(84) Benannte Vertragsstaaten:
**AT BE CH DE DK ES FR GB GR IT LI LU NL SE**

(71) Anmelder: **Opti Patent-, Forschungs- und Fabrikations-AG**

**CH-8750 Riedern-Allmeind(CH)**

(72) Erfinder: **Fröhlich, Alfons**
**Veddershang 5**
**W-4300 Essen 1(DE)**
Erfinder: **Smyczek, Heinz**
**Sybelstrasse 83**
**W-4300 Essen 1(DE)**
Erfinder: **Bettin, Horst**
**Alte Werner-Strasse 10**
**W-4630 Bochum 1(DE)**

(74) Vertreter: **Andrejewski, Walter et al**
**Patentanwälte Andrejewski, Honke & Partner**
**Postfach 10 02 54 Theaterplatz 3**
**W-4300 Essen 1(DE)**

(54) **Reissverschluss mit textilen Tragbändern und angespritzten Verschlussgliedern sowie Verfahren zur Herstellung eines solchen Reissverschlusses.**

(57) Reißverschluß mit textilen Tragbändern, die zumindest längs des verschlußgliederseitigen Randes einen Randwulst aufweisen, mit angespritzten Verschlußgliedern aus thermoplastischem Kunststoff, die von einem die Tragbänder mit Bandschlitz umfassenden Reißverschlußschieber kuppelbar und entkuppelbar sind sowie mit einer Teilbarkeitseinrichtung aus thermoplastischem Kunststoff, die im Bereich von auf die Tragbänder aufgeschweißten Verstärkungsstreifen angespritzte Bauteile aufweist. Die Verstärkungsstreifen sind bis an die Randwülste geführt und mit Durchflußlöchern ausgerüstet. Die angespritzten Bauteile der Teilbarkeitseinrichtung sind oberseitig und unterseitig mit angeformten Zentrierflügeln versehen, die durch in die Durchflußlöcher eingetretenen thermoplastischen Kunststoff miteinander stoffschlüssig und mit den Tragbändern sowie den Verstärkungsstreifen formschlüssig verbunden sind. Die Zentrierflügel mit dem jeweils zugeordneten Tragband und den Verstärkungsstreifen weisen eine dem Bandschlitz des Reißverschlußschiebers angepaßte Dicke auf.

Die Erfindung betrifft einen Reißverschluß mit textilen Tragbändern, die zumindest längs des verschlußseitigen Randes einen Randwulst aufweisen, mit angespritzten Verschlußgliedern aus thermoplastischem Kunststoff, die von einem die Tragbänder mit Bandschlitz umfassenden Reißverschlußschieber kuppelbar und entkuppelbar sind, sowie mit einer Teilbarkeitseinrichtung aus thermoplastischem Kunststoff, die im Bereich von auf die Tragbänder aufgeschweißten Verstärkungsstreifen angespritzte Bauteile aufweist. Die Teilbarkeitseinrichtung besteht bekanntlich aus einem Steckerteil mit Stecker und einem Kastenteil mit angeformtem oder aufgestecktem Kasten. Die Erfindung betrifft auch ein Verfahren, welches für die Herstellung eines solchen Reißverschlusses besonders geeignet ist.

Reißverschlüsse sind bekanntlich Produkte einer Massenfertigung. Bei dem aus der Praxis bekannten Reißverschluß, von dem die Erfindung ausgeht, ist die Verbindung zwischen den Tragbändern und den Verstärkungsstreifen sowie zwischen den Verstärkungsstreifen und den angespritzten Bauteilen der Teilbarkeitseinrichtung zumeist eine Schweißverbindung. Diese genügt häufig nicht den Anforderungen in bezug auf die Festigkeit quer zur Reißverschlußlängsrichtung, weil die verschweißten unterschiedlichen Werkstoffe nicht ausreichend verschweißfreudig sind, was gerade in einer Massenfertigung stört. Hinzu kommen Funktionsbeeinträchtigungen beim Öffnen und Schließen der Teilbarkeitseinrichtung, die auf Zentrierungsungenauigkeiten beruhen.

Der Erfindung liegt die Aufgabe zugrunde, einen Reißverschluß des eingangs beschriebenen grundsätzlichen Aufbaus zu schaffen, bei dem die Teilbarkeitseinrichtung allen Anforderungen in bezug auf insbesondere Zugfestigkeit quer zur Reißverschlußlängsrichtung genügt sowie einfach und funktionssicher zu betätigen ist. Dabei soll gleichzeitig erreicht werden, daß die entsprechenden Reißverschlüsse im Rahmen einer Massenproduktion problemlos gefertigt werden können.

Zur Lösung dieser Aufgabe lehrt die Erfindung, daß die Verstärkungsstreifen bis an die Randwülste geführt und mit Durchflußlöchern ausgerüstet sind, daß die angespritzten Bauteile der Teilbarkeitseinrichtung oberseitig und unterseitig mit angeformten Zentrierflügeln versehen sind, die durch in die Durchflußlöcher eingetretenen thermoplastischen Kunststoff miteinander stoffschlüssig und mit den Tragbändern sowie den Verstärkungsstreifen formschlüssig verbunden sind, und daß die Zentrierflügel mit dem jeweils zugeordneten Tragband und den Verstärkungsstreifen eine dem Bandschlitz des Reißverschlußschiebers angepaßte Dicke aufweisen. Nach bevorzugter Ausführungsform der Erfindung bestehen die Verstärkungsstreifen aus einer niedrigschmelzenden, tragbandfreundlichen Klebeschicht und einer reißfesten Abdeckschicht. Insbesondere lehrt die Erfindung in diesem Zusammenhang, daß die Verstärkungsstreifen aus einer zweischichtigen Kunststofffolie bestehen, deren Klebeschicht aus einem Kunststoff der Gruppe "Polyurethan, Co-Polyester, Co-Polyamid" aufgebaut ist sowie einen Schmelzpunkt im Bereich von 120 °C bis 160 °C aufweist, und deren Abdeckschicht aus Polyamid oder Polyester besteht und einen Schmelzpunkt im Bereich von 210 °C bis 260 °C aufweist.

Die Erfindung geht von der Erkenntnis aus, daß beim Anspritzen der Bauteile für die Teilbarkeitseinrichtung eine zusätzliche Festigkeit durch Formschluß erreicht werden kann, wenn die Verstärkungsstreifen mit Durchflußlöchern für den Formschluß versehen sind. Die Verstärkungsstreifen selbst können werkstoffmäßig so ausgewählt werden, daß mit dem Werkstoff, aus dem die Tragbänder bestehen, eine allen Anforderungen genügende Schweißverbindung eingerichtet werden kann. Die Bauteile der Teilbarkeitseinrichtung, die für den Formschluß eingerichtet sind, erfüllen eine Doppelfunktion, sie sind nämlich zugleich Zentrierflügel, so daß die Bauteile der Teilbarkeitseinrichtung bei der Fertigung mit Hilfe von Spritzgießwerkzeugen, welche die Tragbänder mit den Verstärkungsstreifen über Zentrierstifte in Anspritzstellung festhalten, angespritzt werden können. Die Zentrierflügel weisen daher gegenüber dem Randwulst des zugeordneten Tragbandes sowie gegenüber den Durchflußlöchern versetzte Zentrierstiftausnehmungen auf. Die Randwülste bleiben von den Verstärkungsstreifen frei und können folglich bei der Fertigung dienen. In diesem Zusammenhang ist Gegenstand der Erfindung ein Verfahren zur Herstellung eines Reißverschlusses des beschriebenen Aufbaus, wobei im Bereich der anzubringenden Teilbarkeitseinrichtung die Verstärkungsstreifen mit Hilfe einer Ultraschall-Lochschweißung angebracht und dabei die Durchflußflächen erzeugt werden, wobei danach die Bauteile der Teilbarkeitseinrichtung mit Hilfe von Spritzgießwerkzeugen, welche die Tragbänder mit den Verstärkungsstreifen über Zentrierstifte in Anspritzstellung festhalten, angespritzt werden und wobei die Tragbänder in der für die Durchführung des Verfahrens eingerichteten Maschine, die eine Ultraschall-Schweißstation sowie eine Spritzgießstation aufweist, an den Randwülsten geführt werden. Im allgemeinen wird man im Anschluß an das Anspritzen der Bauteile der Teilbarkeitseinrichtung den Reißverschlußschieber über die angespritzten Bauteile der Teilbarkeitseinrichtung aufschieben. Danach kann die Teilbarkeitseinrichtung durch einen Teilbarkeitskasten vervollständigt werden, der auf das entsprechende Bauteil aufgeschoben und dort durch Festrasten befestigt werden kann.

Im folgenden wird die Erfindung anhand einer lediglich ein Ausführungsbeispiel darstellenden Zeichnung ausführlicher erläutert. Es zeigen in schematischer Darstellung

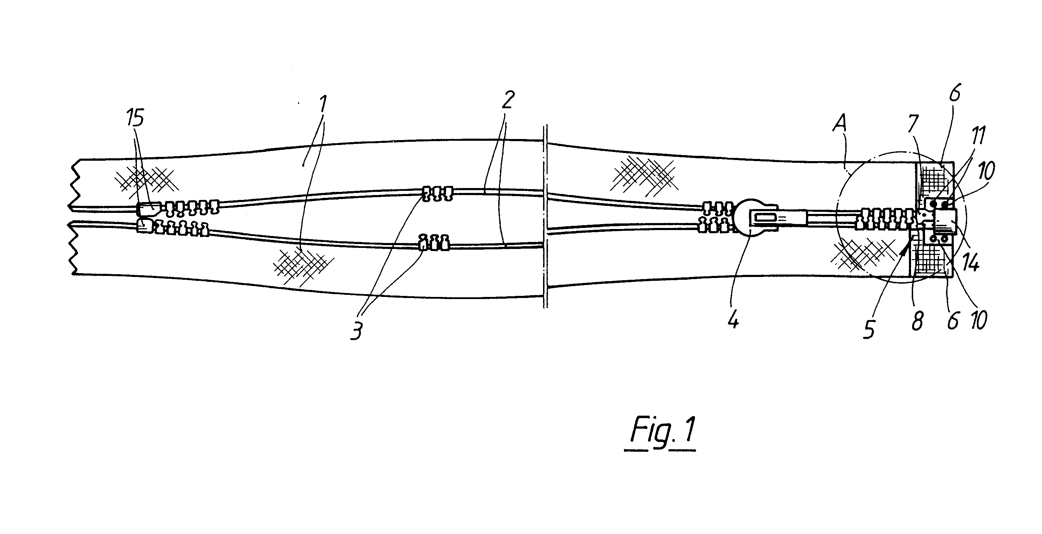

Fig. 1 eine Draufsicht auf einen erfindungs-gemäßen Reißverschluß, ausschnitts-weise,

Fig. 2 den vergrößerten Ausschnitt A aus dem Gegenstand nach Fig. 1, teilweise aufgebrochen,

Fig. 3 einen Schnitt in Richtung B-B durch den Gegenstand nach Fig. 2, und

Fig. 4 mit den Teilfig. A bis G ein Schema zur Erläuterung des Verfahrens zur Herstellung eines erfindungsgemäßen Reißverschlusses.

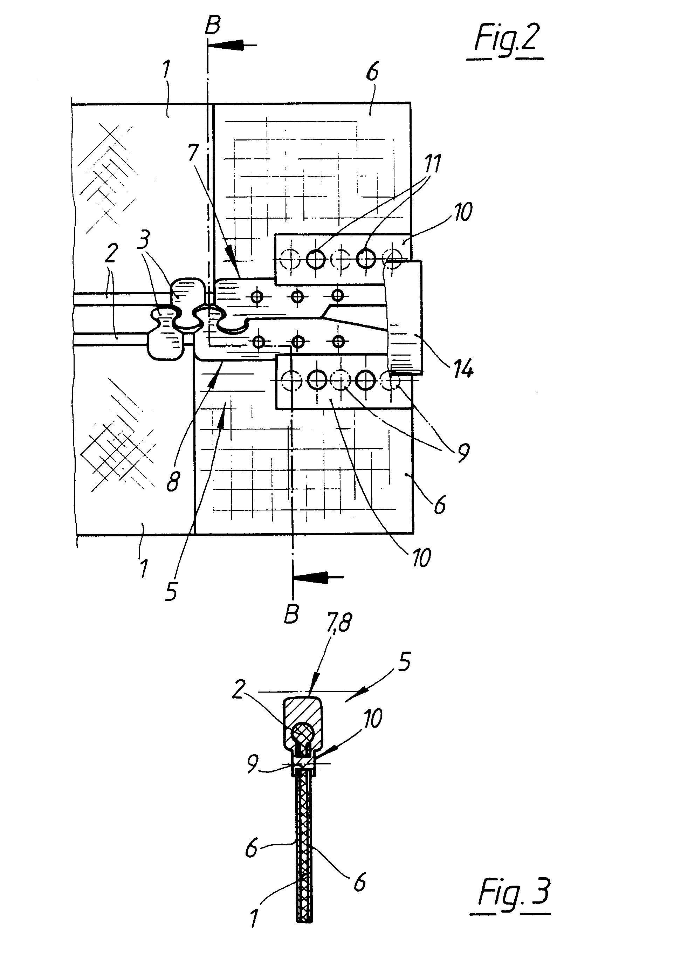

Der in den Figuren dargestellte Reißverschluß besitzt textile Tragbänder 1, die längs des verschlußgliederseitigen Randes einen Randwulst 2 aufweisen, wobei an dieser Seite Verschlußglieder 3 aus thermoplastischem Kunststoff angespritzt sind. Die Verschlußglieder 3 sind von einem die Tragbänder 1 mit Bandschlitz umfassenden Reißverschlußschieber 4 kuppelbar und entkuppelbar. Der Reißverschluß ist mit einer Teilbarkeitseinrichtung 5 aus thermoplastischem Kunststoff ausgerüstet, die im Bereich von auf die Tragbänder aufgeschweißten Verstärkungsstreifen 6 angespritzte Bauteile 7, 8 aufweist. Insbesondere aus einer vergleichenden Betrachtung der Fig. 2 und 3 entnimmt man, daß die Verstärkungsstreifen 6 bis an die Randwülste 2 geführt und mit Durchflußlöchern 9 ausgerüstet sind. Man erkennt fernerhin, daß die angespritzten Bauteile 7, 8 der Teilbarkeitseinrichtung 5 oberseitig und unterseitig mit angeformten Zentrierflügeln 10 versehen sind, die durch in die Durchflußlöcher 9 eingetretenen thermoplastischen Kunststoff miteinander stoffschlüssig, mit den Tragbändern 1 sowie den Verstärkungsstreifen 6 aber formschlüssig verbunden sind. Die Zentrierflügel 10 besitzen zusammen mit dem jeweils zugeordneten Tragband 1 und den Verstärkungsstreifen 6 eine dem Bandschlitz des Reißverschlußschiebers 4 angepaßte Dicke. Die Verstärkungsstreifen 6 sind besonders aufgebaut und werkstoffmäßig besonders eingerichtet, wie es die Patentansprüche 2 und 3 beschreiben. In der Fig. 2 erkennt man, daß die Zentrierflügel 10 gegenüber dem Randwulst 2 der zugeordneten Tragbänder 1 sowie gegenüber den Durchflußlöchern 9 versetzte Zentrierstiftausnehmungen 11 aufweisen.

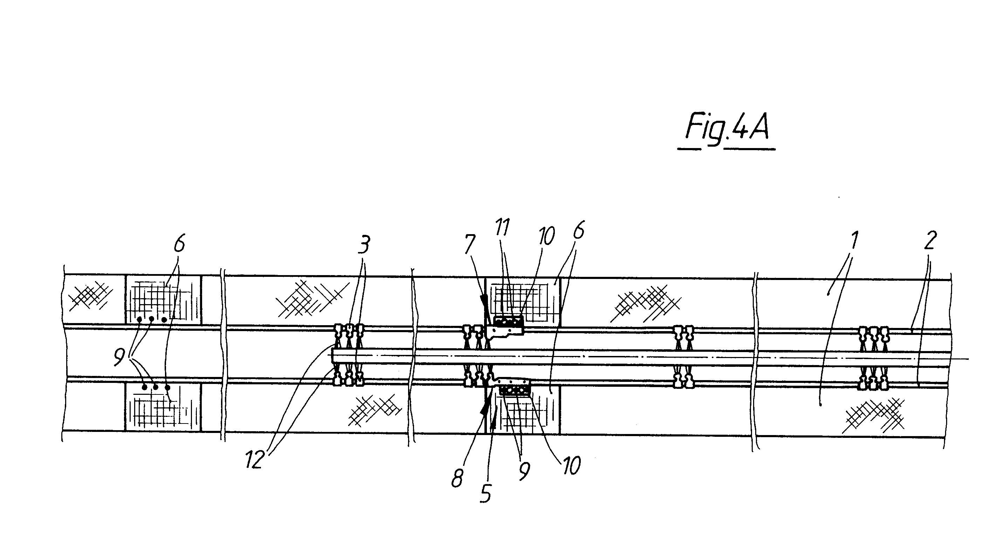

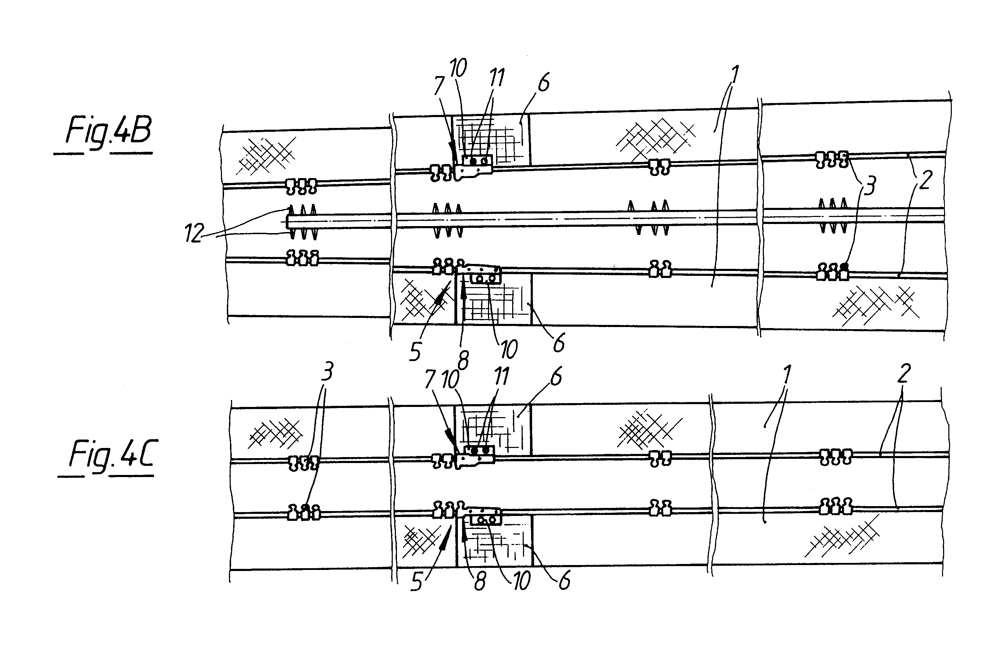

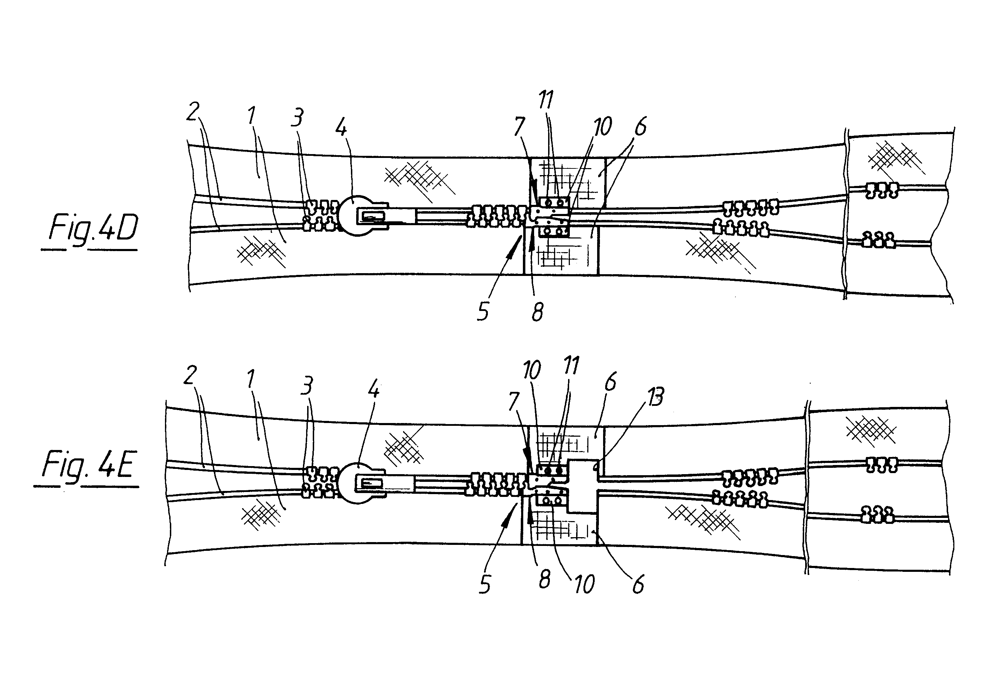

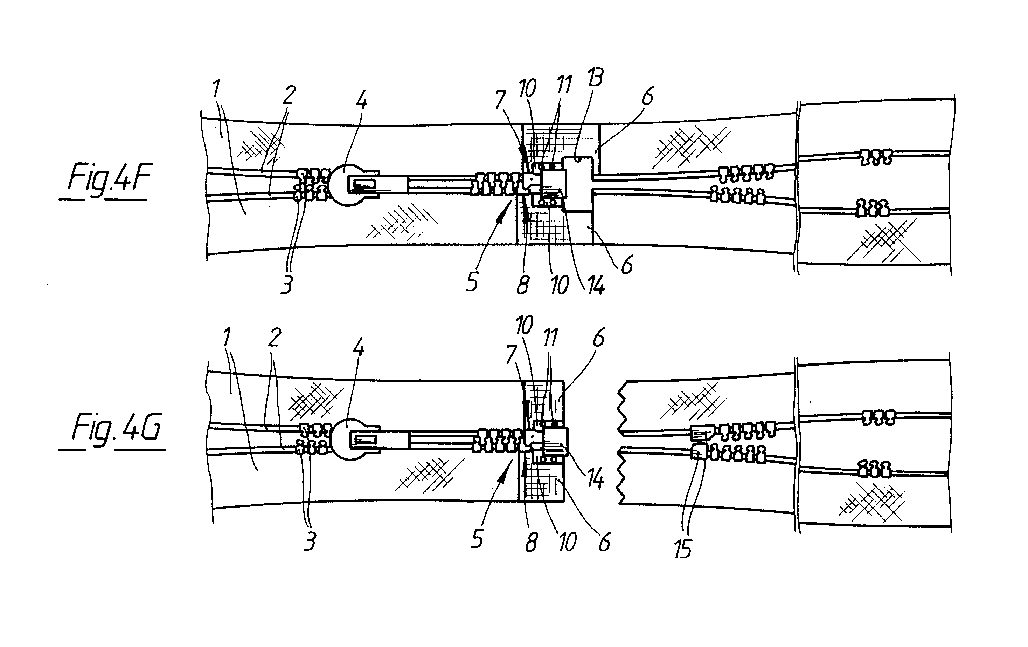

Betrachtet man die Fig. 4, so zeigt die Fig. 4A zunächst, daß im Bereich der anzubringenden Teilbarkeitseinrichtung 5 die Verstärkungsstreifen 6 mit Hilfe einer Ultraschall-Lochschweißung angebracht wurden, wobei gleichzeitig die Durchflußlöcher 9 erzeugt werden. Im Anschluß daran werden in diesem Ausführungsbeispiel die Verschlußglieder 3 angespritzt. Danach oder gleichzeitig werden die Bauteile 7, 8 der Teilbarkeitseinrichtung 5 mit Hilfe von Spritzgießwerkzeugen, die die Tragbänder 1 mit den Verstärkungsstreifen 6 über Zentrierstifte in Anspritzstellung festhalten, angespritzt. Man erkennt hier neben den Durchflußlöchern 9 die Zentrierstiftausnehmungen 11, die bei diesem Arbeitsgang in den Zentrierflügeln 10 der Bauteile 7, 8 der Teilbarkeitseinrichtung 5 entstanden sind, weil Zentrierstifte im Spritzgießwerkzeug die Tragbänder entsprechend festgehalten haben. In der Fig. 4B erkennt man, daß die Angüsse 12 entfernt werden. Danach wurden die beiden Reißverschlußhälften gemäß Fig. 4C in die Position gebracht, in der sie im Reißverschluß einander zugeordnet sind. Die Fig. 4D erläutert die Verhältnisse nach Aufschieben des Reißverschlußschiebers 4, der mit seinem Bandschlitz die Zentrierflügel 10 mit den dazwischen angeordneten Tragbändern 1 und Verstärkungsstreifen 6 passiert hat. Bei dem Spritzvorgang wurde ein verschlußgliederfreier Bereich freigelassen. In der Fig. 4E erkennt man, daß eine Ausstanzung 13 vorgenommen wurde, die es erlaubt, auf die angespritzten Bauteile 7, 8 der Teilbarkeitseinrichtung 5 einen Steckerkasten 14 aufzuschieben. Diese Zusammenhänge erläutert die Fig. 4F. In der Fig. 4G erkennt man, daß die Anfangsteile 15 aufgesetzt wurden, und die fertigen Reißverschlüsse abgetrennt werden können.

## Patentansprüche

1. Reißverschluß mit textilen Tragbändern, die zumindest längs des verschlußgliederseitigen Randes einen Randwulst aufweisen, mit ange-spritzten Verschlußgliedern aus thermoplasti-schem Kunststoff, die von einem die Tragbän-der mit Bandschlitz umfassenden Reißver-schlußschieber kuppelbar und entkuppelbar sind, sowie mit einer Teilbarkeitseinrichtung aus thermoplastischem Kunststoff, die im Bereich von auf die Tragbänder aufgeschweißten Verstärkungsstreifen angespritzte Bauteile aufweist, **dadurch gekennzeichnet,** daß die Verstärkungsstreifen (6) bis an die Randwülste (2) geführt und mit Durchflußlöchern (9) ausgerüstet sind,

   daß die angespritzten Bauteile (7, 8) der Teilbarkeitseinrichtung (5) oberseitig und unterseitig mit angeformten Zentrierflügeln (10) versehen sind, die durch in die Durchflußlöcher (9) eingetretenen thermoplastischen Kunststoff miteinander stoffschlüssig und mit den Tragbändern (1) sowie den Verstärkungsstreifen (6) formschlüssig verbunden sind, und daß die Zentrierflügel (10) mit dem jeweils zugeordneten Tragband (1) und den Verstärkungsstreifen (6) eine dem Bandschlitz des Reißverschlußschiebers (4) angepaßte Dicke aufweisen.

2. Reißverschluß nach Anspruch 1, dadurch gekennzeichnet, daß die Verstärkungsstreifen (6) aus einer niedrigschmelzenden, tragbandfreundlichen Klebeschicht und einer reißfesten Abdeckschicht bestehen.

3. Reißverschluß nach Anspruch 2, dadurch gekennzeichnet, daß die Verstärkungsstreifen (6) aus einer zweischichtigen Kunststoffolie bestehen, deren Klebeschicht aus einem Kunststoff der Gruppe Polyurethan, Co-Polyester, Co-Polyamid aufgebaut ist sowie einen Schmelzpunkt im Bereich von 120 °C bis 160 °C aufweist, und deren Abdeckschicht aus Polyamid oder Polyester besteht und einen Schmelzpunkt im Bereich von 210 °C bis 260 °C aufweist.

4. Reißverschluß nach einem der Ansprüche 1 bis 3, dadurch gekennzeichnet, daß die Zentrierflügel (10) gegenüber dem Randwulst der zugeordneten Tragbänder (1) sowie gegenüber den Durchflußlöchern (9) versetzte Zentrierstiftausnehmungen (11) aufweisen.

5. Verfahren zur Herstellung eines Reißverschlusses nach einem der Ansprüche 1 bis 4, wobei im Bereich der anzubringenden Teilbarkeitseinrichtung die Verstärkungsstreifen mit Hilfe einer Ultraschall-Lochschweißung angebracht und dabei die Durchflußlöcher erzeugt werden, wobei danach die Bauteile der Teilbarkeitseinrichtung mit Hilfe von Spritzgießwerkzeugen, die die Tragbänder mit den Verstärkungsstreifen über Zentrierstifte in Anspritzstellung festhalten, angespritzt werden und wobei die Tragbänder in der für die Durchführung des Verfahrens eingerichteten Maschine, die eine Ultraschall-Schweißstation sowie eine Spritzgießstation aufweist, an den Randwülsten geführt werden.

_Fig. 1_

EP 0 470 351 A1

Fig.2

Fig.3

Fig.4A

Fig.4B

Fig.4C

EP 0 470 351 A1

EP 0 470 351 A1

_Fig.4D_

_Fig.4E_

_Fig.4F_

_Fig.4G_

EP 0 470 351 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 336 347 (YOSHIDA KOGYO KK)  \* das ganze Dokument \*  --- | 1-3 | A44B19/42  A44B19/34 |
| A | FR-A-2 228 449 (YOSHIDA KOGYO KK)  \* Seite 3, Zeile 21 - Seite 4, Zeile 4; Abbildungen 7,8 \*  --- | 1-4 | |
| A | US-A-2 368 911 (R.F. ANDLER)  \* Spalte 2, Zeile 18 - Zeile 65; Abbildungen 4,5 \*  --- | 1-4 | |
| A | DE-A-2 342 384 (LIGHTNING FASTENERS LTD)  --- | | |
| A | GB-A-446 336 (J. HORA)  ----- | | |

**RECHERCHIERTE SACHGEBIETE (Int. Cl.5)**

A44B

Der vorliegende Recherchenbericht wurde für alle Patentansprüche erstellt

| Recherchenort | Abschlußdatum der Recherche | Prüfer |
|---|---|---|
| DEN HAAG | 23 OKTOBER 1991 | M. VANMOL |

EPO FORM 1503 03.82 (P0403)